# EUROPÄISCHE PATENTSCHRIFT

(11) **EP 3 735 688 B1**
(45) Veröffentlichungstag und Bekanntmachung des Hinweises auf die Patenterteilung: **09.03.2022**
(21) Anmeldenummer: 18808346.3
(22) Anmeldetag: 26.11.2018
(51) Int. Cl.: G10L 15/22, G06F 40/284, G06F 40/30, G10L 15/32

(54) **VERFAHREN, VORRICHTUNG UND COMPUTERLESBARES SPEICHERMEDIUM MIT INSTRUKTIONEN ZUM VERARBEITEN EINER SPRACHEINGABE, KRAFTFAHRZEUG UND NUTZERENDGERÄT MIT EINER SPRACHVERARBEITUNG**
METHOD, DEVICE AND COMPUTER-READABLE STORAGE MEDIUM HAVING INSTRUCTIONS FOR PROCESSING A SPEECH INPUT, MOTOR VEHICLE, AND USER TERMINAL WITH SPEECH PROCESSING
PROCÉDÉ, DISPOSITIF ET SUPPORT D'INFORMATIONS LISIBLE PAR ORDINATEUR AYANT DES INSTRUCTIONS POUR TRAITER UNE ENTRÉE VOCALE, VÉHICULE AUTOMOBILE ET TERMINAL D'UTILISATEUR DOTÉ D'UN TRAITEMENT VOCAL

(30) Priorität: 04.01.2018 DE 102018200088
(43) Veröffentlichungstag der Anmeldung: 11.11.2020
(73) Patentinhaber: VOLKSWAGEN AKTIENGESELLSCHAFT, 38440 Wolfsburg (DE)
(72) Erfinder: WOIKE, Rüdiger, 38106 Braunschweig (DE)
(86) Internationale Anmeldenummer: PCT/EP2018/082543
(87) Internationale Veröffentlichungsnummer: WO 2019/134774

(56) Entgegenhaltungen:
- DE-A1-102014 109 121
- US-A1- 2013 102 295
- US-A1- 2013 197 915

## Beschreibung

Die vorliegende Erfindung betrifft ein Verfahren, eine Vorrichtung und ein computerlesbares Speichermedium mit Instruktionen zum Verarbeiten einer Spracheingabe. Die Erfindung betrifft weiterhin ein Kraftfahrzeug und ein Nutzerendgerät mit einer Sprachverarbeitung, in denen ein erfindungsgemäßes Verfahren oder eine erfindungsgemäße Vorrichtung eingesetzt wird.

Mit einem Sprachverarbeitungssystem können Nutzer über eine Sprachschnittstelle teil- oder vollautomatisierte Dialoge in weitgehend natürlicher Sprache führen. Derartige Sprachverarbeitungssysteme sind beispielsweise aus dem Bereich der Telefondienste bekannt. Bei derartigen Anwendungen erfolgt die gesamte Sprachverarbeitung durch ein Rechnersystem auf Seiten des Dienstanbieters.

Ein weiterer Anwendungsbereich von Sprachverarbeitungssystemen sind "Smart-Home"-Geräte, d.h. Geräte für ein intelligentes Zuhause. Unter dem Oberbegriff Smart Home werden technische Verfahren und Systeme zusammengefasst, mit denen eine höhere Wohn- und Lebensqualität, eine gesteigerte Sicherheit sowie eine effizientere Energienutzung erzielt werden sollen. Basis dafür sind vernetzte und fernsteuerbare Geräte sowie automatisierbare Abläufe. Zum Teil erlauben solche Geräte eine sprachbasierte Interaktion mit einem intelligenten persönlichen Assistenten. Da eine qualitativ hochwertige Sprachverarbeitung eine hohe Rechenleistung erfordert, erfolgt bei solchen Geräten die Sprachverarbeitung überwiegend durch Rechnersysteme auf Seiten des Anbieters des intelligenten persönlichen Assistenten. Lediglich für die Aktivierung der Sprachverarbeitung erfolgt eine begrenzte Spracherkennung durch ein nutzerseitiges Gerät.

Daneben finden zunehmend auch geräteintegrierte Sprachverarbeitungssysteme Verwendung, beispielsweise bei Navigationssystemen in Kraftfahrzeugen, die mittels Spracheingabe gesteuert werden können, oder bei Freisprecheinrichtungen in Kraftfahrzeugen, über die Funktionen des Kraftfahrzeugs kontrolliert werden können. Diese Systeme arbeiten meist lokal.

Vor diesem Hintergrund beschreibt DE 10 2014 017 384 A1 ein Verfahren zum Betreiben einer Kraftfahrzeug-Bedienvorrichtung, um zu einer Spracheingabe eines Benutzers mittels eines Spracherkennungssystems zumindest ein Erkennungsergebnis zu ermitteln und dieses in Form einer Ergebnisliste auszugeben. Falls der Benutzer danach eine zweite Spracheingabe macht, wird überprüft, ob der Benutzer seine erste Spracheingabe inhaltlich wiederholt oder korrigiert, weil er das gewünschte Erkennungsergebnis nicht in der Ergebnisliste gefunden hat.

Die DE 10 2014 201 676 A1 beschreibt ein Verfahren für das Steuern eines Sprachdialogs eines Sprachsystems. Zunächst wird eine erste Äußerung eines Benutzers des Sprachsystems empfangen. Basierend auf dieser ersten Äußerung wird dann eine erste Liste von möglichen Ergebnissen bestimmt. Die Elemente der ersten Liste werden daraufhin analysiert, um eine Zweideutigkeit der Elemente zu bestimmen. Basierend auf einer partiellen Orthographie und der Zweideutigkeit wird schließlich eine Sprachaufforderung an den Benutzer erzeugt, damit dieser die Zweideutigkeit auflösen kann.

Gerade für die Verwendung im Kraftfahrzeug ist eine Steigerung der Zuverlässigkeit der Sprachverarbeitung wünschenswert. Der Fahrer soll möglichst nicht dadurch vom Fahren abgelenkt werden, dass er einen Teil seiner Aufmerksamkeit der Interaktion mit der Sprachverarbeitung widmen muss, weil Spracheingaben nicht verstanden wurden.

Ein erster Ansatz zur Steigerung der Zuverlässigkeit der Sprachverarbeitung basiert auf der Berücksichtigung von Kontextinformationen.

Beispielsweise beschreibt DE 10 2015 213 722 A1 ein Verfahren zum Betreiben eines Spracherkennungssystems in einem Fahrzeug. Beim Erfassen einer Spracheingabe eines Nutzers werden zusätzlich Daten zum Kontext der Spracheingabe erfasst. Daraufhin wird zunächst ein erkannter Text der Spracheingabe erzeugt und eine semantische Analyse des erkannten Textes durchgeführt. In Abhängigkeit von der semantischen Analyse und von den Daten zum Kontext der Spracheingabe wird eine Erkennungsgüte des erkannten Textes bestimmt und ein Sprachmodell aus einer Vielzahl von Sprachmodellen ausgewählt. Dieses Sprachmodell wird für eine weitere Texterkennung und eine weitere semantische Analyse genutzt. Dieser Ansatz wird iterativ wiederholt, bis eine ausreichende Erkennungsgüte erreicht wird. Anhand der letzten semantischen Analyse wird dann eine Funktion ausgeführt. Ein weiterer Ansatz zur Steigerung der Zuverlässigkeit der Sprachverarbeitung nutzt zusätzlich zu einer lokalen Sprachverarbeitung eine Sprachverarbeitung durch ein externes Rechnersystem.

Beispielsweise beschreibt EP 2 909 833 B1 ein Verfahren zur Spracherkennung in einem Kraftfahrzeug. Von einem Benutzer werden Spracheingaben empfangen und mindestens eine von ihnen an ein fahrzeuginternes Onboard-Spracherkennungssystem übergeben. Das Spracherkennungssystem generiert daraufhin ein erstes Erkennungsergebnis. Eine Prozessoreinheit übergibt die Spracheingabe ganz oder teilweise auch an ein fahrzeugexternes Offboard-Spracherkennungssystem, das ein zweites Erkennungsergebnis an die Prozessoreinheit überträgt. Bei der Spracherkennung können Kontextinformationen berücksichtigt werden. Abhängig vom ersten und zweiten Erkennungsergebnis wird dann der Sprachtext von einer Auswerteeinheit bestimmt.

US 2015/0058018 A1 beschreibt ein Verfahren zum Erkennen einer Spracheingabe, die natürliche Sprache und mindestens ein Wort aus einem domänenspezifischen Vokabular umfasst. In einem ersten Sprachverarbeitungsdurchlauf wird ein erster Abschnitt der Spracheingabe identifiziert, der die natürliche Sprache enthält, und ein zweiter Abschnitt, der das mindestens eine domänenspezifische Wort enthält. Zudem wird in diesem Durchgang die im ersten Abschnitt enthaltene natürliche Sprache verarbeitet. In einem zweiten Sprachverarbeitungsdurchlauf wird der zweite Abschnitt mit dem mindestens einen domänenspezifischen Wort verarbeitet.

Hersteller von Nutzerendgeräten, wie beispielsweise Smartphones, Tablets, Laptops oder auch PCs, verwenden seit einiger Zeit eigene Sprachverarbeitungssysteme. Beispiele dafür sind Apple Siri [1], Microsoft Cortana [2] oder Google Allo [3]. Diese Systeme lernen personalisiert das Nutzerverhalten kennen und optimieren durch die fortwährende Nutzung ihre Antworten. Erweiterungen von z.B. Amazon Echo [4, 5] können Smart-Home-Lösungen per Sprache steuern. Teilweise können Smartphones mit einem Sprachverarbeitungssystem bereits in ein Kraftfahrzeug eingebunden werden.

Beispielsweise beschreibt DE 10 2014 209 992 A1 ein Fahrzeugschnittstellenmodul, das mit einem mobilen Gerät eines Nutzers und mit einem Fahrzeug kommunizieren kann. Dazu umfasst das Fahrzeugschnittstellenmodul einen drahtlosen Transceiver für die Kommunikation mit dem mobilen Gerät und einen Fahrzeugtransceiver für die Kommunikation mit einem Fahrzeugdatenbus. Ein Prozessor des Fahrzeugschnittstellenmoduls empfängt mittels des Fahrzeugtransceivers ein Signal vom

Fahrzeugdatenbus, das durch eine Benutzereingabe in ein Fahrzeugcomputersystem initiiert wurde. Der Prozessor ermittelt, ob das Signal zur Aktivierung einer Spracherkennungssitzung auf dem mobilen Gerät auffordert. Falls dies der Fall ist, erfolgt mittels des drahtlosen Transceivers eine Aufforderung an das mobile Gerät, eine Spracherkennungssitzung zu starten.

DE 10 2012 218 938 A1 beschreibt ein Verfahren zur Identifikation und Auslösung von Diensten für eine sprachbasierte Schnittstelle eines mobilen Gerätes. Das Verfahren beinhaltet das Empfangen eines Spracherkennungsergebnisses, das den Inhalt einer Spracheingabe in einem mobilen Gerät darstellt. Ein gewünschter Dienst wird bestimmt, indem das Spracherkennungsergebnis unter Verwendung einer Dienstidentifizierungsgrammatik verarbeitet wird. Eine Benutzerdienstanforderung wird bestimmt, indem ein Teil des Spracherkennungsergebnisses unter Verwendung der dienstspezifischen Grammatik verarbeitet wird. Die Benutzerdienstanforderung wird freigegeben und eine Serviceantwort empfangen. Eine Audionachricht wird aus der Dienstantwort generiert. Die Audionachricht wird einem Benutzer über einen Lautsprecher präsentiert.

Für die Zukunft ist eine Erweiterung der integrierten Sprachbedienung in Kraftfahrzeugen zu erwarten, wobei verstärkt auf eine Sprachverarbeitung in einem Backend zurückgegriffen werden wird. Zu diesem Zweck werden Fahrzeughersteller voraussichtlich eigene Backend-Systeme aufbauen bzw. zur Verfügung stellen.

Aktuelle Sprachverarbeitungssysteme können auf unterschiedliche Weise durch den Nutzer aktiviert werden, wobei die Sprachverarbeitungssysteme auch mehrere Möglichkeiten zur Aktivierung parallel anbieten können.

Ein erster Ansatz besteht darin, dass der Nutzer eine Taste betätigen muss, um eine Spracheingabe zu ermöglichen. Nach Betätigung der Taste erfolgt zunächst eine akustische Rückmeldung des Systems, beispielsweise in Form eines Signaltons oder durch eine Sprachausgabe. Im Anschluss kann der Nutzer einen Sprachbefehl äußern, der vom System erfasst und verarbeitet wird.

Bei einem zweiten Ansatz erfolgt eine Aktivierung des Sprachverarbeitungssystems dadurch, dass der Nutzer ein Signalwort spricht, das vom System erfasst und ausgewertet wird. Das Signalwort ist nicht zwingend ein einzelnes Wort, es kann sich auch um eine Wortfolge handeln. Nach erfolgreicher Erkennung des Signalwortes erfolgt üblicherweise zunächst eine akustische Rückmeldung des Systems. Wie schon beim ersten Ansatz kann dazu ein Signalton oder eine Sprachausgabe genutzt werden. Wie zuvor kann der Nutzer anschließend einen Sprachbefehl äußern, der vom System erfasst und verarbeitet wird. Da das Sprachverarbeitungssystem durch das Nennen des Signalwortes aus einem Ruhezustand aufgeweckt wird, hat sich als alternative Bezeichnung für das Signalwort auch der Begriff der "Wake-Up-Phrase" bzw. Weckphrase etabliert.

Gemäß einem dritten Ansatz spricht der Nutzer das Signalwort direkt gefolgt von einer Spracheingabe beziehungsweise einem Sprachbefehl in einem einzigen Satz. In diesem Fall erfolgt unmittelbar nach Erkennung des Signalwortes keine akustische Rückmeldung des Systems.

Betrachtet man nun den Fall, dass in einem Fahrzeug neben einer eigenen Sprachverarbeitung des Fahrzeugherstellers auch eine Sprachverarbeitung durch weitere Anbieter sowie die Einbindung von mobilen Nutzerendgeräten nebst deren Sprachverarbeitung zur Verfügung gestellt wird, stellt sich die Frage, wie die verschiedenen Dienste vom Nutzer angesprochen werden können. Ein Ansatz besteht darin, dass die verschiedenen Sprachverarbeitungssysteme über bestimmte Tasten oder Signalwörter angesprochen werden. Ein Tastendruck an einem Multifunktionslenkrad startet dann beispielsweise die Sprachverarbeitung eines Smartphones, während mit dem Signalwort "Hallo Volkswagen" die Sprachverarbeitung des Fahrzeugherstellers angesprochen wird, bei der die Spracherkennung im Fahrzeug oder auch teilweise oder vollständig in einem externen System durchgeführt wird. Mit dem Signalwort "Hallo Computer" wird hingegen die Sprachverarbeitung des weiteren Anbieters angesprochen.

Ein Nachteil dieses Ansatzes ist, dass der Nutzer wissen muss, welche Funktionalität er nutzen möchte, um zu entscheiden, welchen Sprachassistenten er ansprechen muss. Zudem muss der Nutzer wissen, wie der jeweilige Sprachassistent angesprochen wird.

DE 10 2014 109 121 A1 beschreibt ein Sprachsystem zum Auswählen zwischen verfügbaren Sprachdialogdiensten. Das System vermittelt zwischen einer Vielzahl von Geräten und den Sprachdialogdiensten in einem Eignungskatalog, um ein ausgewähltes Gerät und einen ausgewählten Dialogdienst zu bestimmen.

Es ist eine Aufgabe der Erfindung, verbesserte Lösungen zum Verarbeiten einer Spracheingabe aufzuzeigen.

Diese Aufgabe wird durch ein Verfahren mit den Merkmalen des Anspruchs 1, durch ein computerlesbares Speichermedium mit Instruktionen gemäß Anspruch 11 und durch eine Vorrichtung mit den Merkmalen des Anspruchs 12 gelöst. Bevorzugte Ausgestaltungen der Erfindung sind Gegenstand der abhängigen Ansprüche.

Gemäß einem ersten Aspekt der Erfindung umfasst ein Verfahren zum Verarbeiten einer Spracheingabe die Schritte:
- Empfangen einer Spracheingabe eines Nutzers;
- Aufbereiten der Spracheingabe für zumindest einen gewählten von zwei oder mehr verfügbaren Sprachverarbeitungsdiensten, wobei beim Aufbereiten der Spracheingabe eine oder mehrere aufbereitete Spracheingaben generiert werden, indem jeweils ein zu dem jeweiligen Sprachverarbeitungsdienst zugehöriges Signalwort zur Spracheingabe hinzugefügt wird; und
- Übergeben der aufbereiteten Spracheingabe an den jeweils zugehörigen Sprachverarbeitungsdienst.

Gemäß einem weiteren Aspekt der Erfindung enthält ein computerlesbares Speichermedium Instruktionen, die bei Ausführung durch einen Computer den Computer zur Ausführung der folgenden Schritte zum Verarbeiten einer Spracheingabe veranlassen:
- Empfangen einer Spracheingabe eines Nutzers;
- Aufbereiten der Spracheingabe für zumindest einen gewählten von zwei oder mehr verfügbaren Sprachverarbeitungsdiensten, wobei beim Aufbereiten der Spracheingabe eine oder mehrere aufbereitete Spracheingaben generiert werden, indem jeweils ein zu dem jeweiligen Sprachverarbeitungsdienst zugehöriges Signalwort zur Spracheingabe hinzugefügt wird; und
- Übergeben der aufbereiteten Spracheingabe an den jeweils zugehörigen Sprachverarbeitungsdienst.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zum Verarbeiten einer Spracheingabe auf:
- einen Eingang, der eingerichtet ist, eine Spracheingabe zu empfangen;
- ein Vorverarbeitungsmodul, das eingerichtet ist, die Spracheingabe für zumindest einen gewählten von zwei oder mehr verfügbaren Sprachverarbeitungsdiensten aufzubereiten, wobei beim Aufbereiten der Spracheingabe eine oder mehrere aufbereitete Spracheingaben generiert werden, indem jeweils ein zu dem jeweiligen Sprachverarbeitungsdienst zugehöriges Signalwort zur Spracheingabe hinzugefügt wird; und
- eine Schnittstelle, die eingerichtet ist, die aufbereitete Spracheingaben an den jeweils zugehörigen Sprachverarbeitungsdienst zu übergeben.

Bei der erfindungsgemäßen Lösung werden Spracheingaben eines Nutzers zunächst vorverarbeitet, bevor sie an zumindest einen von mehreren verfügbaren Sprachverarbeitungsdiensten übergeben werden. Im Rahmen der Vorverarbeitung wird sichergestellt, dass die verschiedenen Sprachverarbeitungsdienste korrekt angesprochen werden beziehungsweise passende Sprachverarbeitungsdienste kontaktiert werden. Der Nutzer kann daher einfach sprechen und muss sich keine Gedanken machen, welchen Sprachverarbeitungsdienst er kontaktieren muss und wie er diesen Sprachverarbeitungsdienst aktivieren kann.

Beim Aufbereiten der Spracheingabe wird für zumindest einen gewählten der zwei oder mehr verfügbaren Sprachverarbeitungsdienste eine aufbereitete Spracheingabe generiert, indem jeweils ein zu dem jeweiligen Sprachverarbeitungsdienst zugehöriges Signalwort zur Spracheingabe hinzugefügt wird. An jeden der gewählten Sprachverarbeitungsdienste wird dann die entsprechende aufbereitete Spracheingabe übergeben. Bei dieser Lösung wird die ursprüngliche Spracheingabe für die gewählten Sprachverarbeitungsdienste mit dem passenden Signalwort versehen und dann an die jeweiligen Sprachverarbeitungsdienste übermittelt. Dieser Ansatz hat den Vorteil, dass seitens der Vorverarbeitung nur eine sehr einfache Vorverarbeitung benötigt wird, die nur eine geringe Rechenleistung erfordert.

Gemäß einem Aspekt der Erfindung umfasst das erfindungsgemäße Verfahren als weitere Schritte:
- Empfangen von Antworten der Sprachverarbeitungsdienste;
- Auswerten der empfangenen Antworten; und
- Ausgeben zumindest einer der nach dem Auswerten verbliebenen Antworten.

Nachdem die aufbereiteten Spracheingaben an die gewählten Sprachverarbeitungsdienste übergeben und von diesen verarbeitet wurden, erfolgt eine Auswertung der empfangenen Antworten durch einen Antwortfilter. Dieser leitet sinnvolle beziehungsweise plausible Antworten an den Nutzer durch, d.h. Antworten mit der höchsten Trefferwahrscheinlichkeit. Hierbei liegt die Intelligenz in der Bewertung der unterschiedlichen Antworten der externen Sprachverarbeitungsdienste durch den Antwortfilter. Ein Vorteil der Filterung der Antworten liegt darin, dass der Nutzer sich nicht mit unsinnigen oder unwahrscheinlichen Antworten befassen muss, wodurch die Akzeptanz des Konzeptes durch den Nutzer erhöht wird.

Gemäß einem Aspekt der Erfindung erfolgt eine Rückfrage an den Nutzer, wenn beim Auswerten der empfangenen Antworten zwei oder mehr Antworten als plausibel eingestuft werden. Es kann vorkommen, dass mehrere plausible Antworten empfangen werden. Hier ist es sinnvoll, dass eine Rückfrage an den Nutzer erfolgt, welche Antwort für die zugrundeliegende Spracheingabe am besten einer vom Nutzer erwarteten Antwort entspricht. Auf diese Weise kann das System anhand von semantisch ähnlichen Zusammenhängen lernen und zukünftige Antworten besser bewerten.

Gemäß einem Aspekt der Erfindung werden beim Auswerten Antworten unterdrückt, die erkennen lassen, dass eine aufbereitete Spracheingabe von einem der angesprochenen Sprachverarbeitungsdienste nicht erfolgreich verarbeitet werden konnte. Üblicherweise folgt die Antwort eines Sprachverarbeitungsdienstes einer gewissen Regel, wenn eine Spracheingabe nicht verarbeitet werden konnte. Beispielsweise kann die Antwort mit "Ich verstehe nicht..." beginnen. Derartige Antworten lassen sich somit recht leicht filtern, so dass sie gar nicht erst einer Überprüfung hinsichtlich ihrer Plausibilität unterworfen werden. Auf diese Weise kann die für die Auswertung der empfangenen Antworten erforderliche Rechenleistung reduziert werden.

Gemäß einem Aspekt der Erfindung umfasst das Aufbereiten der Spracheingabe die Schritte:
- Analysieren der Spracheingabe in Hinblick auf ihren Inhalt;
- Zuordnen der Spracheingabe zu einem der verfügbaren Sprachverarbeitungsdienste; und
- Generieren einer aufbereiteten Spracheingabe durch Hinzufügen eines zum zugeordneten Sprachverarbeitungsdienst gehörigen Signalwortes zur Spracheingabe.

Bei dieser Lösung wird die Spracheingabe dahingehend verarbeitet, dass zunächst eine semantische Erkennung vorgenommen und beispielsweise das Thema der Spracheingabe bestimmt wird. Abhängig vom Thema wird dann der geeignete Sprachverarbeitungsdienst bestimmt. Anschließend wird das für diesen Sprachverarbeitungsdienst erforderliche Signalwort zur Spracheingabe hinzugefügt und die so aufbereitete Spracheingabe an den Sprachverarbeitungsdienst übergeben. Zwar erfordert dieser Ansatz eine intelligentere und damit rechenintensivere Vorverarbeitung, ein Vorteil liegt aber darin, dass der Nutzer im Gegenzug nur eine einzige Antwort erhält. Es ist daher keine weitere Auswertung der empfangenen Antwort erforderlich.

Gemäß einem Aspekt der Erfindung erfolgt beim Analysieren der Spracheingabe ein Abgleich von in der Spracheingabe erkannten Schlüsselwörtern mit einer Datenbank, in der eine Zuordnung zwischen Schlüsselwörtern und Sprachverarbeitungsdiensten abgelegt ist. Durch die Verwendung einer Schlüsselwortdatenbank kann auf einfache Weise eine Zuordnung der Spracheingabe zu einem Sprachverarbeitungsdienst erfolgen. Beispielsweise kann das Schlüsselwort "Kaufen" mit einem ersten Sprachverarbeitungsdienst verknüpft sein, das Schlüsselwort "Wetter" mit einem zweiten Sprachverarbeitungsdienst und das Schlüsselwort "wärmer" mit einem dritten Sprachverarbeitungsdienst, z.B. einer fahrzeugeigenen Sprachverarbeitung, die basierend auf der Spracheingabe die Klimaanlage regelt.

Gemäß einem Aspekt der Erfindung wird dem Nutzer eine Möglichkeit einer Korrektur der Zuordnung der Spracheingabe zu einem der verfügbaren Sprachverarbeitungsdienste bereitgestellt. Bei der inhaltlichen Analyse der Spracheingaben können falsche Entscheidungen getroffen werden. Daher ist es sinnvoll, wenn der Nutzer korrigierend eingreifen kann. Basierend auf den vorgenommenen Korrekturen können die Entscheidungsgrundlagen für die Zuordnung dynamisch angepasst werden, damit dieselbe Anfrage beim nächsten Mal korrekt zugeordnet wird. Auf diese Weise ist das System lernfähig.

Gemäß einem Aspekt der Erfindung wird beim Aufbereiten der Spracheingabe zunächst ein eventuell in der Spracheingabe vorhandenes und zu einem der verfügbaren Sprachverarbeitungsdienste gehöriges Signalwort entfernt. Es kann vorkommen, dass der Nutzer gewohnheitsmäßig ein Signalwort verwendet, das nicht zur konkreten Spracheingabe passt. Um die Spracheingabe dennoch sinnvoll verarbeiten zu können, ist es hilfreich, ein solches Signalwort im Rahmen der Vorverarbeitung zunächst zu entfernen.

Gemäß einem Aspekt der Erfindung wird beim Aufbereiten der Spracheingabe ein in der Spracheingabe vorhandenes und zu einem der verfügbaren Sprachverarbeitungsdienste gehöriges Signalwort detektiert. Die Spracheingabe wird dann dem entsprechenden Sprachverarbeitungsdienst zugeordnet. Bei dieser Lösung wird davon ausgegangen, dass ein vom Nutzer gesprochenes Signalwort in der Spracheingabe korrekt ist. Die Spracheingabe kann auf dieser Grundlage ohne weitere Verarbeitung an den entsprechenden Sprachverarbeitungsdienst übergeben werden.

Gemäß einem Aspekt der Erfindung wird beim Aufbereiten der Spracheingabe die Spracheingabe neu synthetisiert. Beispielsweise können überflüssige Füllwörter entfernt werden oder Spracheingaben derart umformuliert werden, dass sie durch die jeweiligen Sprachverarbeitungsdienste zuverlässiger erkannt werden. So kann die Spracheingabe "Mir ist kalt" z.B. als "Hallo Volkswagen, mach bitte meine Temperatur im Fahrzeug höher" an eine fahrzeugeigene Sprachverarbeitung übergeben werden. Selbstverständlich kann eine Spracheingabe dabei für verschiedene Sprachverarbeitungsdienste unterschiedlich neu synthetisiert werden.

Besonders vorteilhaft wird ein erfindungsgemäßes Verfahren oder eine erfindungsgemäße Vorrichtung in einem Fahrzeug, insbesondere einem Kraftfahrzeug, eingesetzt. Weiterhin kann ein erfindungsgemäßes Verfahren oder eine erfindungsgemäße Vorrichtung auch in Nutzerendgeräten genutzt werden, beispielsweise in Smartphones, Smart-Home-Geräten, PCs und Laptops, etc.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Verarbeiten einer Spracheingabe;
- Fig. 2: zeigt schematisch eine Verarbeitung von empfangenen Antworten;
- Fig. 3: zeigt eine erste Ausführungsform einer Vorrichtung zum Verarbeiten einer Spracheingabe;
- Fig. 4: zeigt eine zweite Ausführungsform einer Vorrichtung zum Verarbeiten einer Spracheingabe;
- Fig. 5: stellt schematisch ein Kraftfahrzeug dar, in dem eine erfindungsgemäße Lösung realisiert ist;
- Fig. 6: zeigt schematisch einen Systementwurf einer ersten Variante der erfindungsgemäßen Lösung zum Verarbeiten einer Spracheingabe;
- Fig. 7: zeigt schematisch einen Systementwurf einer zweiten Variante der erfindungsgemäßen Lösung zum Verarbeiten einer Spracheingabe; und
- Fig. 8: zeigt einige Beispiele für Spracheingaben durch den Nutzer und zugehörige aufbereitete Spracheingaben.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

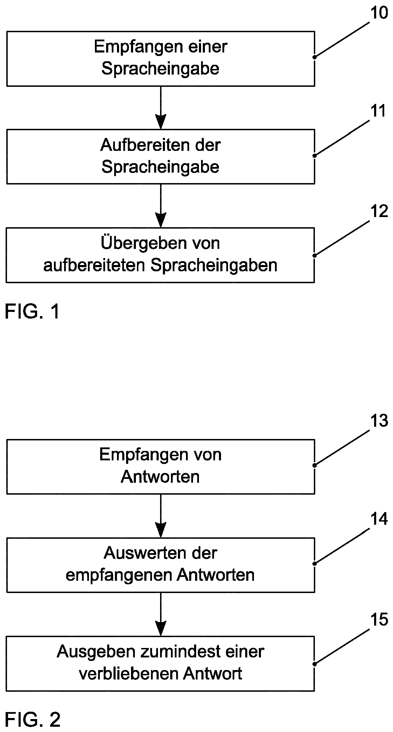

Fig. 1 zeigt schematisch ein Verfahren zum Verarbeiten einer Spracheingabe. In einem ersten Schritt wird eine Spracheingabe eines Nutzers empfangen 10. Diese wird im Anschluss für zumindest einen von zwei oder mehr verfügbaren Sprachverarbeitungsdiensten aufbereitet 11. Schließlich werden aufbereitete Spracheingaben an einen oder mehrere der verfügbaren Sprachverarbeitungsdienste übergeben 12.

In einer ersten Variante kann beim Aufbereiten der Spracheingabe für mehrere oder jeden der zwei oder mehr verfügbaren Sprachverarbeitungsdienste eine aufbereitete Spracheingabe generiert werden, indem jeweils ein zugehöriges Signalwort zur Spracheingabe hinzugefügt wird. An jeden der gewählten Sprachverarbeitungsdienste wird dann die zugehörige aufbereitete Spracheingabe übergeben. Anschließend werden Antworten der Sprachverarbeitungsdienste empfangen 13 und ausgewertet 14. Zumindest eine der nach dem Auswerten verbliebenen Antworten wird schließlich ausgegeben 15. Dies ist schematisch in Fig. 2 dargestellt. Wenn beim Auswerten der empfangenen Antworten zwei oder mehr Antworten als plausibel eingestuft werden, kann eine Rückfrage an den Nutzer erfolgen. Zudem können beim Auswerten Antworten unterdrückt werden, die erkennen lassen, dass eine aufbereitete Spracheingabe von einem der verfügbaren Sprachverarbeitungsdienste nicht erfolgreich verarbeitet werden konnte.

In einer zweiten Variante kann die Spracheingabe in Hinblick auf ihren Inhalt analysiert werden, beispielsweise durch einen Abgleich von in der Spracheingabe erkannten Schlüsselwörtern mit einer Datenbank, in der eine Zuordnung zwischen Schlüsselwörtern und Sprachverarbeitungsdiensten abgelegt ist. Basierend auf einem Ergebnis der Analyse wird die Spracheingabe einem der verfügbaren Sprachverarbeitungsdienste zugeordnet. Durch Hinzufügen eines zum zugeordneten Sprachverarbeitungsdienst gehörigen Signalwortes zur Spracheingabe wird schließlich eine aufbereitete Spracheingabe generiert. Dabei kann dem Nutzer eine Möglichkeit einer Korrektur der Zuordnung der Spracheingabe zu einem der verfügbaren Sprachverarbeitungsdienste bereitgestellt werden.

In einer dritten Variante kann ein in der Spracheingabe vorhandenes und zu einem der verfügbaren Sprachverarbeitungsdienste gehöriges Signalwort detektiert werden. Die Spracheingabe wird dann dem entsprechenden Sprachverarbeitungsdienst zugeordnet.

Vorzugsweise kann der Nutzer festlegen, welche Art der Aufbereitung genutzt wird, oder Eigenschaften der Aufbereitung beeinflussen.

Bei den ersten beiden Varianten kann gegebenenfalls zunächst ein eventuell in der Spracheingabe vorhandenes und zu einem der verfügbaren Sprachverarbeitungsdienste gehöriges Signalwort entfernt werden. In allen Varianten kann die Spracheingabe für die Übergabe an die Sprachverarbeitungsdienste neu synthetisiert werden.

Weiterhin kann vorgesehen sein, dass der Nutzer zunächst durch geeignete Maßnahmen die Sprachverarbeitung aktivieren muss, beispielsweise durch einen Tastendruck, oder die Weitergabe an einen Sprachverarbeitungsdienst explizit bestätigen muss. Auf diese Weise kann ausgeschlossen werden, dass z.B. Gespräche zwischen den Insassen eines Fahrzeugs ungewollt Aktionen durch die Sprachverarbeitungsdienste auslösen.

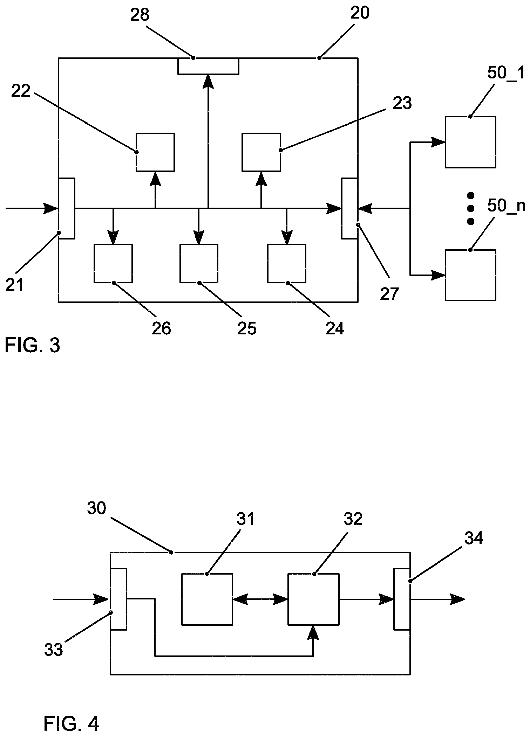

Fig. 3 zeigt eine vereinfachte schematische Darstellung einer ersten Ausführungsform einer Vorrichtung 20 zum Verarbeiten einer Spracheingabe. Die Vorrichtung 20 hat einen Eingang 21, über den eine Spracheingabe eines Nutzers empfangen werden kann, z.B. von einem Mikrofon oder einer anderen Audioquelle, sowie einen Speicher 26, in dem die empfangene Spracheingabe gespeichert werden kann. Ein Vorverarbeitungsmodul 22 bereitet die Spracheingabe für zumindest einen von zwei oder mehr verfügbaren Sprachverarbeitungsdiensten 50_1,..., 50_n auf. Das Aufbereiten der Spracheingabe kann dabei wie weiter oben in Zusammenhang mit Fig. 1 erläutert erfolgen. Die Vorrichtung 20 kann daher eine Datenbank 24 aufweisen, in der eine Zuordnung zwischen Schlüsselwörtern und Sprachverarbeitungsdiensten 50_1,..., 50_n abgelegt ist. Über eine Schnittstelle 27 werden aufbereitete Spracheingaben an einen oder mehrere der verfügbaren Sprachverarbeitungsdienste 50_1,..., 50_n übergeben. Über die Schnittstelle 27 werden zudem Antworten der Sprachverarbeitungsdienste 50_1,..., 50_n empfangen, die von einem Antwortfilter 23 ausgewertet werden können. Das Auswerten der Antworten kann wie oben in Zusammenhang mit Fig. 2 erläutert erfolgen.

Das Vorverarbeitungsmodul 22, der Antwortfilter 23 und die Datenbank 24 können von einer Kontrolleinheit 25 gesteuert werden. Über eine Nutzerschnittstelle 28 können gegebenenfalls Einstellungen des Vorverarbeitungsmoduls 22, des Antwortfilters 23 oder der Kontrolleinheit 25 geändert werden oder Rückfragen an den Nutzer gestellt und von diesem beantwortet werden. Über die Nutzerschnittstelle 28 können zudem Inhalte der Datenbank 24 bearbeitet werden. Die in der Vorrichtung 20 anfallenden Daten können bei Bedarf im Speicher 26 abgelegt werden, beispielsweise für eine spätere Auswertung oder für eine Nutzung durch die Komponenten der Vorrichtung 20. Das Vorverarbeitungsmodul 22, der Antwortfilter 23 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer CPU oder GPU. Der Eingang 21 und die Schnittstelle 27 können als getrennte Schnittstellen oder als kombinierte bidirektionale Schnittstelle implementiert sein.

Fig. 4 zeigt eine vereinfachte schematische Darstellung einer zweiten Ausführungsform einer Vorrichtung 30 zum Verarbeiten einer Spracheingabe. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Audiodaten, z.B. von einem Mikrofon oder einer anderen Audioquelle. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nicht-volatile Speicherbereiche aufweisen und unterschiedlichste Speichergeräte und Speichermedien umfassen, beispielsweise Festplatten, optische Speichermedien oder Halbleiterspeicher.

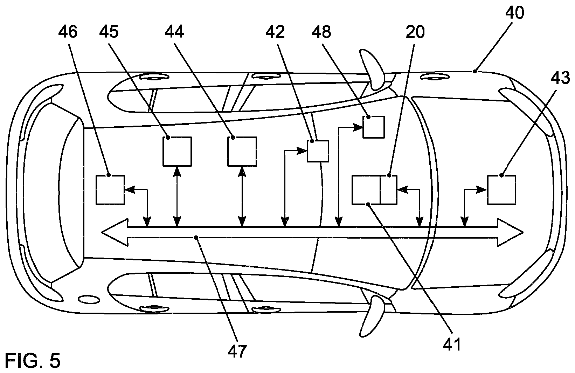

Fig. 5 stellt schematisch ein Kraftfahrzeug 40 dar, in dem eine erfindungsgemäße Lösung realisiert ist. Das Kraftfahrzeug 40 weist eine Bedienvorrichtung 41 auf, beispielsweise ein Infotainment-System mit einem Touchscreen und der Möglichkeit einer Sprachbedienung. Zum Erfassen von Spracheingaben ist im Kraftfahrzeug 40 ein Mikrofon 42 verbaut. Weiterhin weist das Kraftfahrzeug 40 eine Vorrichtung 20 zum Verarbeiten einer Spracheingabe auf. Die Vorrichtung 20 kann auch in die Bedienvorrichtung 41 integriert sein. Weitere Komponenten des Kraftfahrzeugs 40 sind eine Klimaautomatik 43 und ein Navigationssystem 44, die vom Nutzer unter anderem durch Spracheingaben bedient werden können. Mittels einer Datenübertragungseinheit 45 kann bei Bedarf eine Verbindung zu einem Anbieter eines externen Sprachverarbeitungsdienstes aufgebaut werden, beispielsweise über ein Mobilfunknetz. Zur Speicherung von Daten ist ein Speicher 46 vorhanden. Der Datenaustausch zwischen den verschiedenen Komponenten des Kraftfahrzeugs 40 erfolgt über ein Netzwerk 47. Antworten auf die Spracheingaben des Nutzers können über einen Lautsprecher 48 ausgegeben werden.

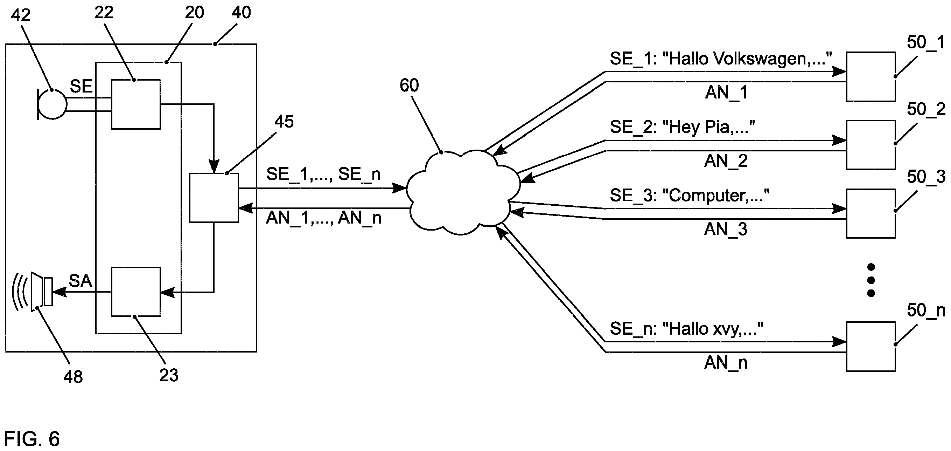

Nachfolgend soll die Funktionsweise der erfindungsgemäßen Lösung detaillierter anhand der Figuren 6 bis 8 am Beispiel der Nutzung in einem Kraftfahrzeug erläutert werden.

Fig. 6 zeigt schematisch einen Systementwurf einer ersten Variante der erfindungsgemäßen Lösung zum Verarbeiten einer Spracheingabe SE. Eine Vorrichtung 20 zum Verarbeiten einer Spracheingabe erfasst mit Hilfe eines im Kraftfahrzeug 40 verbauten Mikrofons 42 eine Spracheingabe SE durch einen Nutzer. Ein Vorverarbeitungsmodul 22 der Vorrichtung 20 bereitet die Spracheingabe SE für eine Reihe von Sprachverarbeitungsdiensten 50_1,..., 50_n auf. Dabei kann die Spracheingabe SE bei Bedarf neu synthetisiert werden. Im Beispiel handelt es sich bei den Sprachverarbeitungsdiensten 50_1,..., 50_n konkret um einen Dienst 50_1 des Herstellers des Kraftfahrzeugs 40, eine Smart-Home-Lösung 50_2 und eine Einkaufsapplikation 50_3. Als letzter Sprachverarbeitungsdienst 50_n ist ein generischer Dienst dargestellt. Der Dienst 50_1 des Herstellers reagiert dabei auf das Signalwort "Hallo Volkswagen", die Smart-Home-Lösung 50_2 als persönlicher intelligenter Assistent auf das Signalwort "Hey Pia", die Einkaufsapplikation 50_3 auf das Signalwort "Computer" und der generische Dienst 50_n auf das Signalwort "Hallo xyz". Die resultierenden aufbereiteten Spracheingaben SE_1,..., SE_n werden mit Hilfe einer Datenübertragungseinheit 45 des Kraftfahrzeugs 40 über ein Datennetz 60 an die gewünschten Sprachverarbeitungsdienste 50_1,..., 50_n übermittelt. Über das Datennetz 60 und die Datenübertragungseinheit 45 werden Antworten AN_1,..., AN_n der Sprachverarbeitungsdienste 50_1,..., 50_n empfangen und an einen Antwortfilter 23 der Vorrichtung 20 übergeben. Dieser wertet die empfangenen Antworten AN_1,..., AN_n aus und gibt zumindest eine der nach dem Auswerten verbliebenen Antworten als Sprachausgabe SA über einen Lautsprecher 48 des Kraftfahrzeugs 40 an den Nutzer aus. Dabei werden vorzugsweise nur sinnvolle Antworten der Sprachverarbeitungsdienste 50_1,..., 50_n vom Antwortfilter 23 durchgeleitet. Beispielsweise werden die Antworten "Ich habe dich nicht verstanden." von der Smart-Home-Lösung 50_2 und der Einkaufsapplikation 50_3 als Resultat auf die ursprüngliche Spracheingabe "Mir ist kalt." vom Antwortfilter 23 geblockt. Die Antwort "Ich habe die Temperatur im Fahrzeug um zwei Grad höher gestellt." vom Dienst 50_1 des Herstellers des Kraftfahrzeugs 40 wird hingegen vom Antwortfilter 23 durchgeleitet.

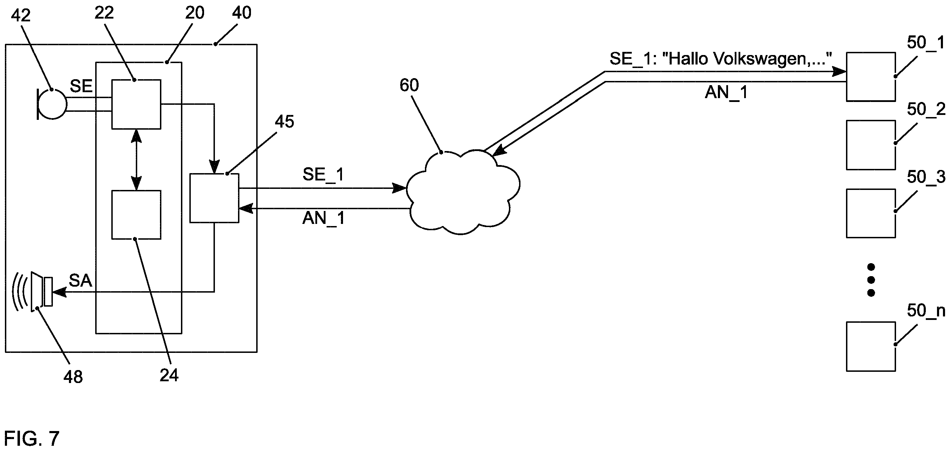

Fig. 7 zeigt schematisch einen Systementwurf einer zweiten Variante der erfindungsgemäßen Lösung zum Verarbeiten einer Spracheingabe SE. Der Systementwurf entspricht weitgehend dem Systementwurf aus Fig. 6, allerdings wurde für das Aufbereiten der Spracheingabe SE ein anderer Ansatz realisiert. Das Vorverarbeitungsmodul 22 analysiert die Spracheingabe SE in Hinblick auf ihren Inhalt. Dazu gleicht das Vorverarbeitungsmodul 22 oder ein zusätzlich zu diesem Zweck bereitgestelltes Modul in der Spracheingabe SE erkannte Schlüsselwörter mit einer Datenbank 24 ab, in der eine Zuordnung zwischen Schlüsselwörtern und Sprachverarbeitungsdiensten 50_1,..., 50_n abgelegt ist. Basierend auf dem Ergebnis der Analyse wird die Spracheingabe SE einem der Sprachverarbeitungsdienste 50_1,..., 50_n zugeordnet, in diesem Beispiel dem Dienst 50_1 des Herstellers des Kraftfahrzeugs 40. Durch Hinzufügen des entsprechenden Signalwortes zur Spracheingabe SE wird schließlich eine aufbereitete Spracheingabe SE_1 generiert. Dabei kann die Spracheingabe SE zudem neu synthetisiert werden. Die aufbereitete Spracheingabe SE_1 wird wie gehabt mit Hilfe der Datenübertragungseinheit über das Datennetz 60 an den zugeordneten Sprachverarbeitungsdienst 50_1 übermittelt. Über das Datennetz 60 und die Datenübertragungseinheit 45 wird schließlich die Antwort AN_1 des Sprachverarbeitungsdienstes 50_1 empfangen und als Sprachausgabe SA über den Lautsprecher 48 an den Nutzer ausgegeben. Beispielsweise kann die ursprüngliche Spracheingabe "Mir ist kalt." in der Form "Hallo Volkswagen, mach bitte meine Temperatur im Fahrzeug höher!" an den Dienst 50_1 des Herstellers des Kraftfahrzeugs 40 weitergegeben werden. Der Nutzer erhält daraufhin die Antwort "Ich habe die Temperatur im Fahrzeug um zwei Grad höher gestellt." Entsprechend wird die ursprüngliche Spracheingabe "Mach zuhause die Heizung an!" in der Form "Hey Pia, mach zuhause die Heizung an!" an die Smart-Home-Lösung 50_2 weitergegeben. Der Nutzer erhält daraufhin beispielsweise die Antwort "Ich habe die Heizung eingeschaltet."

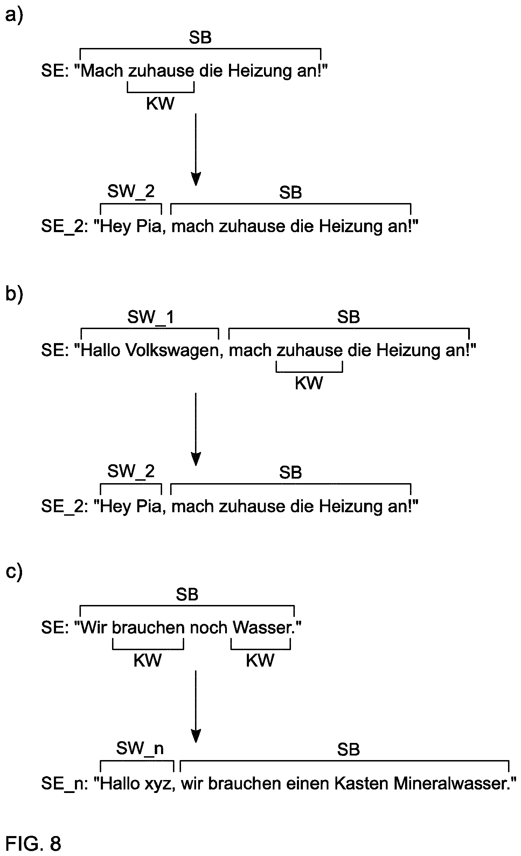

Fig. 8 zeigt einige Beispiele für Spracheingaben SE durch den Nutzer und zugehörige aufbereitete Spracheingaben.

Im Beispiel a) umfasst die Spracheingabe SE lediglich einen Sprachbefehl SB, in diesem Fall die Aufforderung "Mach zuhause die Heizung an!". Aus dem Schlüsselwort KW "zuhause" kann abgeleitet werden, dass die Spracheingabe sich an die von Nutzer eingesetzte Smart-Home-Lösung richtet. Da diese das Signalwort SW_2 "Hey Pia" nutzt, wird die Spracheingabe SE vor der Übergabe an die Smart-Home-Lösung um dieses Signalwort SW_2 ergänzt. Die aufbereitete Spracheingabe SE_2 lautet somit "Hey Pia, mach zuhause die Heizung an!".

Im Beispiel b) umfasst die Spracheingabe SE neben dem bereits bekannten Sprachbefehl SB "mach zuhause die Heizung an" mit der Formulierung "Hallo Volkswagen" ein Signalwort SW_1, das zu einem Sprachverarbeitungsdienst gehört, der nicht zum Inhalt des Sprachbefehls SB passt. Im Rahmen der Vorverarbeitung wird dieses Signalwort SW_1 entfernt und durch das passende Signalwort SW_2 "Hey Pia" ersetzt, so dass die aufbereitete Spracheingabe SE_2 wiederum "Hey Pia, mach zuhause die Heizung an!" lautet.

Im Beispiel c) umfasst die Spracheingabe SE lediglich den Sprachbefehl SB "Wir brauchen noch Wasser". Aus den Schlüsselwörtern KW "brauchen" und "Wasser" kann geschlossen werden, dass der Nutzer etwas für einen Einkauf notieren möchte , wofür der Nutzer eine Applikation einsetzt, die das Signalwort SW_n "Hallo xyz" verwendet. Aus den bisherigen Rückmeldungen des Nutzers ist dem System zudem bekannt, dass der Nutzer mit "Wasser" einen Kasten Mineralwasser meint. Die vom System erzeugte aufbereitete Spracheingabe SE_n lautet daher "Hallo xyz, wir brauchen einen Kasten Mineralwasser."

### Referenzen

[1] https://de.wikipedia.org/wiki/Siri_(Software)
[2] https://de.wikipedia.org/wiki/Cortana_(Software)
[3] https://de.wikipedia.org/wiki/Google_Allo
[4] https://de.wikipedia.org/wiki/Amazon_Echo
[5] https://reverb.ai/

### Bezugszeichenliste

- 10: Empfangen einer Spracheingabe
- 11: Aufbereiten der Spracheingabe
- 12: Übergeben von aufbereiteten Spracheingaben
- 13: Empfangen von Antworten
- 14: Auswerten der empfangenen Antworten
- 15: Ausgeben zumindest einer verbliebenen Antwort
- 20: Vorrichtung
- 21: Eingang
- 22: Vorverarbeitungsmodul
- 23: Antwortfilter
- 24: Datenbank
- 25: Kontrolleinheit
- 26: Speicher
- 27: Schnittstelle
- 28: Nutzerschnittstelle
- 30: Vorrichtung
- 31: Speicher
- 32: Prozessor
- 33: Eingang
- 34: Ausgang
- 40: Kraftfahrzeug
- 41: Bedienvorrichtung
- 42: Mikrofon
- 43: Klimaautomatik
- 44: Navigationssystem
- 45: Datenübertragungseinheit
- 46: Speicher
- 47: Netzwerk
- 48: Lautsprecher
- 50_1,..., 50_n: Sprachverarbeitungsdienst
- 60: Datennetz
- AN_1,..., AN_n: Antwort
- KW: Schlüsselwort
- SA: Sprachausgabe
- SB: Sprachbefehl
- SE: Spracheingabe
- SE_1,..., SE_n: Aufbereitete Spracheingabe
- SW_1,..., SW_n: Signalwort

## Patentansprüche

1. Verfahren zum Verarbeiten einer Spracheingabe (SE), mit den Schritten:
- Empfangen (10) einer Spracheingabe (SE) eines Nutzers;
- Aufbereiten (11) der Spracheingabe (SE) für zumindest einen gewählten von zwei oder mehr verfügbaren Sprachverarbeitungsdiensten (50_1,..., 50_n), wobei beim Aufbereiten (11) der Spracheingabe (SE) eine oder mehrere aufbereitete Spracheingaben (SE_1,..., SE_n) generiert werden, indem jeweils ein zu dem jeweiligen Sprachverarbeitungsdienst (50_1,..., 50_n) zugehöriges Signalwort (SW_1,..., SW_n) zur Spracheingabe (SE) hinzugefügt wird; und
- Übergeben (12) der aufbereiteten Spracheingaben (SE_1,..., SE_n) an den jeweils zugehörigen Sprachverarbeitungsdienst (50_1,..., 50_n).

2. Verfahren gemäß Anspruch 1, ferner umfassend die Schritte:
- Empfangen (13) von Antworten (AN_1,..., AN_n) der Sprachverarbeitungsdienste (50_1,..., 50_n);
- Auswerten (14) der empfangenen Antworten (AN_1,..., AN_n); und
- Ausgeben (15) zumindest einer der nach dem Auswerten (14) verbliebenen Antworten (AN_1,..., AN_n).

3. Verfahren gemäß Anspruch 2, wobei eine Rückfrage an den Nutzer erfolgt, wenn beim Auswerten (14) der empfangenen Antworten (AN_1,..., AN_n) zwei oder mehr Antworten (AN_1,..., AN_n) als plausibel eingestuft werden.

4. Verfahren gemäß Anspruch 2 oder 3, wobei beim Auswerten (14) Antworten (AN_1,..., AN_n) unterdrückt werden, die erkennen lassen, dass eine aufbereitete Spracheingabe (SE_1,..., SE_n) von einem der verfügbaren Sprachverarbeitungsdienste (50_1,..., 50_n) nicht erfolgreich verarbeitet werden konnte.

5. Verfahren gemäß Anspruch 1, wobei das Aufbereiten (11) der Spracheingabe (SE) umfasst:
- Analysieren der Spracheingabe (SE) in Hinblick auf ihren Inhalt;
- Zuordnen der Spracheingabe (SE) zu einem der verfügbaren Sprachverarbeitungsdienste (50_1,..., 50_n); und
- Generieren einer aufbereiteten Spracheingabe (SE_1,..., SE_n) durch Hinzufügen eines zum zugeordneten Sprachverarbeitungsdienst (50_1,..., 50_n) gehörigen Signalwortes (SW_1,..., SW_n) zur Spracheingabe (SE).

6. Verfahren gemäß Anspruch 5, wobei beim Analysieren der Spracheingabe (SE) ein Abgleich von in der Spracheingabe (SE) erkannten Schlüsselwörtern (KW) mit einer Datenbank (24) erfolgt, in der eine Zuordnung zwischen Schlüsselwörtern (KW) und Sprachverarbeitungsdiensten (50_1,..., 50_n) abgelegt ist.

7. Verfahren gemäß Anspruch 5 oder 6, wobei dem Nutzer eine Möglichkeit einer Korrektur der Zuordnung der Spracheingabe (SE) zu einem der verfügbaren Sprachverarbeitungsdienste (50_1,..., 50_n) bereitgestellt wird.

8. Verfahren gemäß einem der vorherigen Ansprüche, wobei beim Aufbereiten (11) der Spracheingabe (SE) zunächst ein eventuell in der Spracheingabe (SE) vorhandenes und zu einem der verfügbaren Sprachverarbeitungsdienste (50_1,..., 50_n) gehöriges Signalwort (SW_1,..., SW_n) entfernt wird.

9. Verfahren gemäß Anspruch 1, wobei beim Aufbereiten (11) der Spracheingabe (SE) ein in der Spracheingabe (SE) vorhandenes und zu einem der verfügbaren Sprachverarbeitungsdienste (50_1,..., 50_n) gehöriges Signalwort (SW_1,..., SW_n) detektiert wird und die Spracheingabe (SE) dem entsprechenden Sprachverarbeitungsdienst (50_1,..., 50_n) zugeordnet wird.

10. Verfahren gemäß einem der vorherigen Ansprüche, wobei beim Aufbereiten (11) der Spracheingabe (SE) die Spracheingabe (SE) neu synthetisiert wird.

11. Computerlesbares Speichermedium mit Instruktionen, die bei Ausführung durch einen Computer den Computer zur Ausführung der Schritte eines Verfahrens gemäß einem der Ansprüche 1 bis 10 zum Verarbeiten einer Spracheingabe (SE) veranlassen.

12. Vorrichtung (20) zum Verarbeiten einer Spracheingabe (SE), mit:
- einem Eingang (21), der eingerichtet ist, eine Spracheingabe (SE) zu empfangen (10);
- einem Vorverarbeitungsmodul (22), das eingerichtet ist, die Spracheingabe (SE) für zumindest einen gewählten von zwei oder mehr verfügbaren Sprachverarbeitungsdiensten (50_1,..., 50_n) aufzubereiten (11), wobei beim Aufbereiten (11) der Spracheingabe (SE) eine oder mehrere aufbereitete Spracheingaben (SE_1,..., SE_n) generiert werden, indem jeweils ein zu dem jeweiligen Sprachverarbeitungsdienst (50_1,..., 50_n) zugehöriges Signalwort (SW_1,..., SW_n) zur Spracheingabe (SE) hinzugefügt wird; und
- einer Schnittstelle (27), die eingerichtet ist, die aufbereiteten Spracheingaben (SE_1,..., SE_n) an den jeweils zugehörigen Sprachverarbeitungsdienst (50_1,... , 50_n) zu übergeben.

13. Kraftfahrzeug (40) mit einer Sprachverarbeitung, wobei das Kraftfahrzeug (40) eine Vorrichtung (20) gemäß Anspruch 12 aufweist oder eingerichtet ist, ein Verfahren gemäß einem der Ansprüche 1 bis 10 zum Verarbeiten einer Spracheingabe (SE) auszuführen.

14. Nutzerendgerät mit einer Sprachverarbeitung, wobei das Nutzerendgerät eine Vorrichtung (20) gemäß Anspruch 12 aufweist oder eingerichtet ist, ein Verfahren gemäß einem der Ansprüche 1 bis 10 zum Verarbeiten einer Spracheingabe (SE) auszuführen.

## Claims

1. A method for processing a speech input (SE), having the steps:
- receiving (10) a speech input (SE) of a user;
- preprocessing (11) the speech input (SE) for at least one selected speech processing service (50_1, ..., 50_n) of one of two or more available speech processing services (50_1, ..., 50_n), wherein, during the preprocessing (11) of the speech input (SE), one or more preprocessed speech inputs (SE_1, ..., SE_n) are generated in that a respective signal word (SW_1, ..., SW_n) associated with the respective speech processing service (50_1, ..., 50_n) is added to the speech input (SE); and
- transferring (12) the preprocessed speech inputs (SE_1, ..., SE_n) to the respective associated speech processing service (50_1, ..., 50_n).

2. The method according to claim 1, further comprising the steps of:
- receiving (13) responses (AN_1, ..., AN_n) of the speech processing services (50_1, ..., 50_n);
- evaluating (14) the received responses (AN_1, ..., AN_n); and
- outputting (15) at least one of the responses (AN_1, ..., AN_n) remaining after the evaluation (14).

3. The method according to claim 2, wherein a query to the user takes place if, during the evaluation (14) of the received responses (AN_1, ..., AN_n), two or more responses (AN_1, ..., AN_n) are classified as plausible.

4. The method according to claim 2 or 3, wherein, during the evaluation (14), responses (AN_1, ..., AN_n) are suppressed that reveal that a preprocessed speech input (SE_1, ..., SE_n) could not be successfully processed by one of the available speech processing services (50_1, ..., 50_n).

5. The method according to claim 1, wherein the preprocessing (11) of the speech input (SE) comprises:
- analyzing the speech input (SE) with respect to its content;
- associating the speech input (SE) with one of the available speech processing services (50_1, ..., 50_n); and
- generating a preprocessed speech input (SE_1, ..., SE_n) by adding a signal word (SW_1, ..., SW_n) belonging to the associated speech processing service (50_1, ..., 50_n) to the speech input (SE).

6. The method according to claim 5, wherein, during the analysis of the speech input (SE), keywords (KW) detected in the speech input (SE) are compared with a database (24) in which is stored an association between keywords (KW) and speech processing services (50_1, ..., 50_n).

7. The method according to claim 5 or 6, wherein the user is provided with a possibility of correcting the association of the speech input (SE) with one of the available speech processing services (50_1, ..., 50_n).

8. The method according to one of the preceding claims, wherein, during the preprocessing (11) of the speech input (SE), a signal word (SW_1, ..., SW_n) that may be present in the speech input (SE) and belongs to one of the available speech processing services (50_1, ..., 50_n) is first removed.

9. The method according to claim 1, wherein, during the preprocessing (11) of the speech input (SE), a signal word (SW_1, ..., SW_n) that is present in the speech input (SE) and belongs to one of the available speech processing services (50_1, ..., 50_n) is detected, and the speech input (SE) is associated with the corresponding speech processing service (50_1, ..., 50_n).

10. The method according to one of the preceding claims, wherein, during the preprocessing (11) of the speech input (SE), the speech input (SE) is resynthesized.

11. A computer-readable storage medium having instructions that, when executed by a computer, cause the computer to execute the steps of a method according to one of claims 1 to 10 for processing a speech input (SE).

12. A device (20) for processing a speech input (SE), having:
- an input (21) that is configured to receive (10) a speech input (SE);
- a preprocessing module (22) that is configured to preprocess (11) the speech input (SE) for at least one selected speech processing services (50_1, ..., 50_n) of one of two or more available speech processing services (50_1, ..., 50_n), wherein, during the preprocessing (11) of the speech input (SE), one or more preprocessed speech inputs (SE_1, ..., SE_n) are generated in that a signal word (SW_1, ..., SW_n) belonging to the respective speech processing service (50_1, ..., 50_n) is added to the speech input (SE); and
- an interface (27) that is configured to transfer the preprocessed speech inputs (SE_1, ..., SE_n) to the respective associated speech processing service (50_1, ..., 50_n).

13. A motor vehicle (40) having speech processing, wherein the motor vehicle (40) has a device (20) according to claim 12 or is configured to execute a method according to one of claims 1 to 10 for processing a speech input (SE).

14. A user terminal with speech processing, wherein the user terminal has a device (20) according to claim 12, or is configured to execute a method according to one of claims 1 to 10 for processing a speech input (SE).

## Revendications

1. Procédé pour traiter une entrée vocale (SE), comprenant les étapes de :
- réception (10) d'une entrée vocale (SE) d'un utilisateur ;
- préparation (11) de l'entrée vocale (SE) pour au moins un service choisi parmi deux ou plusieurs services de traitement vocal (50_1,..., 50_n) disponibles, lors de la préparation (11) de l'entrée vocale (SE), une ou plusieurs entrées vocales préparées (SE_1,..., SE_n) étant générées, en ajoutant respectivement un mot-clé (SW_1,..., SW_n) appartenant au service de traitement vocal (50_1,..., 50_n) respectif à l'entrée vocale (SE) ; et
- remise (12) des entrées vocales préparées (SE_1,..., SE_n) au service de traitement vocal (50_1,..., 50_n) respectif correspondant.

2. Procédé selon la revendication 1, comprenant en outre les étapes de :
- réception (13) de réponses (AN_1,..., AN_n) des services de traitement vocal (50_1,..., 50_n) ;
- évaluation (14) des réponses (AN_1,..., AN_n) reçues ; et
- sortie (15) d'au moins une des réponses (AN_1,..., AN_n) restantes après l'évaluation (14).

3. Procédé selon la revendication 2, dans lequel une rétrodemande est faite à l'utilisateur, si lors de l'évaluation (14) des réponses (AN_1,..., AN_n) reçues, deux ou plusieurs réponses (AN_1,..., AN_n) sont classifiées comme plausibles.

4. Procédé selon la revendication 2 ou 3, dans lequel, lors de l'évaluation (14), des réponses (AN_1,..., AN_n) sont supprimées, lesquelles permettent de reconnaitre qu'une entrée vocale traitée (SE_1,..., SE_n) n'a pas pu être traitée avec succès par un des services de traitement vocal (50_1,..., 50_n) disponibles.

5. Procédé selon la revendication 1, dans lequel la préparation (11) de l'entrée vocale (SE) comprend :
- l'analyse de l'entrée vocale (SE) concernant son contenu ;
- l'association de l'entrée vocale (SE) à un des services de traitement vocal (50_1,..., 50_n) disponibles ; et
- la génération d'une entrée vocale traitée (SE_1,..., SE_n) par l'ajout d'un mot-clé (SW_1,..., SW_n) appartenant au service de traitement vocal (50_1,..., 50_n) associé à l'entrée vocale (SE).

6. Procédé selon la revendication 5, dans lequel, lors de l'analyse de l'entrée vocale (SE), une comparaison des mots-clés (KW) reconnus dans l'entrée vocale (SE) avec une base de données (24) est effectuée, dans laquelle une association entre mots-clés (KW) et services de traitement vocal (50_1,..., 50_n) est enregistrée.

7. Procédé selon la revendication 5 ou 6, dans lequel une possibilité d'une correction de l'association de l'entrée vocale (SE) à un des services de traitement vocal (50_1,..., 50_n) disponibles est fournie à l'utilisateur.

8. Procédé selon l'une quelconque des revendications précédentes, dans lequel, lors de la préparation (11) de l'entrée vocale (SE), un mot-clé (SW_1,..., SW_n) éventuellement présent dans l'entrée vocale (SE) et appartenant à un des services de traitement vocal (50_1,..., 50_n) disponible est d'abord retiré.

9. Procédé selon la revendication 1, dans lequel, lors de la préparation (11) de l'entrée vocale (SE), un mot-clé (SW_1,..., SW_n) présent dans l'entrée vocale (SE) et appartenant à un des services de traitement vocal (50_1,..., 50_n) disponibles est détecté et l'entrée vocale (SE) est associée au service de traitement vocal (50_1,..., 50_n) correspondant.

10. Procédé selon l'une quelconque des revendications précédentes, dans lequel, lors de la préparation (11) de l'entrée vocale (SE), l'entrée vocale (SE) est synthétisée de nouveau.

11. Support d'informations lisible par ordinateur ayant des instructions, lesquelles, lors de leur exécution par un ordinateur, amènent l'ordinateur à exécuter les étapes d'un procédé selon l'une quelconque des revendications 1 à 10 pour traiter une entrée vocale (SE).

12. Dispositif (20) pour traiter une entrée vocale (SE), comprenant :
- une entrée (21), laquelle est conçue pour recevoir (10) une entrée vocale (SE) ;
- un module de prétraitement (22), lequel est conçu pour préparer (11) l'entrée vocale (SE) pour au moins un service choisi parmi deux ou plusieurs services de traitement vocal (50_1,..., 50_n) disponibles, lors de la préparation (11) de l'entrée vocale (SE), une ou plusieurs entrées vocales préparées (SE_1,..., SE_n) étant générées, en ajoutant respectivement un mot-clé (SW_1,..., SW_n) appartenant au service de traitement vocal (50_1,..., 50_n) respectif à l'entrée vocale (SE) ; et
- une interface (27), laquelle est conçue pour remettre les entrées vocales préparées (SE_1,..., SE_n) au service de traitement vocal (50_1,..., 50_n) respectif correspondant.

13. Véhicule automobile (40) comprenant un traitement vocal, le véhicule automobile (40) présentant un dispositif (20) selon la revendication 12 ou étant conçu pour exécuter un procédé selon l'une quelconque des revendications 1 à 10 pour traiter une entrée vocale (SE).

14. Terminal d'utilisateur comprenant un traitement vocal, le terminal d'utilisateur présentant un dispositif (20) selon la revendication 12 ou étant conçu pour exécuter un procédé selon l'une quelconque des revendications 1 à 10 pour traiter une entrée vocale (SE).
